# EUROPÄISCHE PATENTANMELDUNG

(11) **EP 3 139 138 A1**
(43) Veröffentlichungstag der Anmeldung: **08.03.2017**
(21) Anmeldenummer: 16185811.3
(22) Anmeldetag: 26.08.2016
(51) Int. Cl.: G01F 1/66, G01F 15/18, B29C 65/48, B29C 65/00, F16B 11/00

(54) **MESSARMATUR FÜR EINEN DURCHFLUSSMESSER**

(30) Priorität: 04.09.2015 DE 102015217024
(71) Anmelder: Landis+Gyr GmbH, 90459 Nürnberg (DE)
(72) Erfinder: Seifert, Christian, 92289 Ursensollen (DE); Liedtke, Moritz, 90762 Fürth (DE); Jäkel, Andreas, 90443 Nürnberg (DE)
(74) Vertreter: Rau, Schneck & Hübner Patentanwälte Rechtsanwälte PartGmbB

(57) **Zusammenfassung**

Die Messarmatur (1) ist für einen Durchflussmesser zur schallbasierten Erfassung einer Durchflussmenge eines flüssigen oder gasförmigen Mediums bestimmt. Sie umfasst ein als Kunststoffteil ausgeführtes rohrförmiges Hauptteil (2) mit einer zu einer Durchflussrichtung (5) des Mediums parallelen Mittenlängsachse (6), mit einer als integraler Bestandteil des rohrförmigen Hauptteils (2) ausgeführten und im Inneren angeordneten eigentlichen Messtrecke (7), und mit zwei an einer Außenseite einer Wand (16) des Hauptteils (2) vorhandenen Wandlerkontaktflächen (8, 9) für zwei Schallwandler, wobei die eine der beiden Wandlerkontaktflächen (8, 9) in der Durchflussrichtung (5) gesehen vor der anderen der beiden Wandlerkontaktflächen (8, 9) angeordnet ist und die Messstrecke (7) sich zumindest teilweise zwischen zwei auf der Mittenlängsachse (6) liegenden Wandlerprojektionsstellen (10, 11), die sich jeweils durch eine senkrechte Projektion (12, 13) der betreffenden der beiden Wandlerkontaktflächen (8, 9) auf die Mittenlängsachse (6) ergeben, erstreckt. Weiterhin umfasst die Messarmatur (1) zwei von außen in zwei Halteraufnahmeöffnungen (14, 15) des rohrförmigen Hauptteils (2) eingesetzte, in das Innere des rohrförmigen Hauptteils (2) hineinragende und jeweils als ein Kunststoffteil ausgeführte Reflektorhalter (3, 4), wobei jede der Halteraufnahmeöffnungen (14, 15) jeweils einer der Wandlerkontaktflächen (8, 9) zugeordnet ist. Jeder der Reflektorhalter (3, 4) hat ein Halterunterteil (20) in Form eines Montagekragens. An der Außenseite des rohrförmigen Hauptteils (2) sind zwei Montagesockel (24, 25) vorhanden, wobei ein die jeweilige Halteraufnahmeöffnung (14, 15) umgebender Öffnungsrand eine ebene Randfläche hat. Der Montagekragen ist mit einem Montagesteg (21) und der Öffnungsrand mit einer dazu korrespondierenden Montagenut (26) versehen.

## Beschreibung

Die Erfindung betrifft eine Messarmatur für einen Durchflussmesser zur schallbasierten Erfassung einer Durchflussmenge eines flüssigen oder gasförmigen Mediums.

Durchflussmesser auf Grundlage der (Ultra-)Schallmesstechnik sind bekannt. Impulsförmige (Ultra-)Schallsignale werden mittels (Ultra-) Schallwandler erzeugt sowie in Flussrichtung und entgegen der Flussrichtung durch das Medium gesendet. Der Unterschied der Laufzeiten der Schallsignale in beiden Laufrichtungen wird zur Ermittlung der Durchflussmenge des Mediums ausgewertet. Derartige ultraschallbasierte Durchflussmesser arbeiten nach dem Laufzeitdifferenzprinzip.

Es gibt verschiedene Ausgestaltungen. Zum einen sind Einrichtungen bekannt, die Durchflussmesser im eigentlichen Sinne darstellen und ausschließlich die Durchflussmenge des Mediums ermitteln. Zum anderen gibt es auch Energiezähler, beispielsweise in Form von Wärme- und Kältezählern, bei denen die nach dem vorstehend erläuterten Prinzip ermittelte Durchflussmenge mit mindestens einem zusätzlich Temperaturmesswert in Verbindung gebracht wird, um so die über das Medium zugeführte (Wärme- oder Kälte-) Energie zu bestimmen. Auch derartige Energiezähler sind hier als - speziell ausgestaltete - Durchflussmesser zu verstehen.

Das Schallsignal kann auf unterschiedlichen Laufwegen durch das zu erfassende Medium gesendet werden. Es gibt Ausgestaltungen, bei denen das Schallsignal das Medium schräg durchquert, aber auch solche, bei denen Umlenkungs- bzw. Reflektionsstellen für das Schallsignal vorhanden sind, so dass sich insgesamt z.B. ein U- oder ein W-förmiger Schallsignal-Laufweg ergibt. Es sind aber auch Ausgestaltungen mit komplexeren Schallsignal-Laufwegen bekannt. So wird in der EP 1 337 810 B1 ein Durchflussmesser beschrieben, bei dem ein etwa schraubenförmiger Laufweg des Schallsignals durch das zu erfassende Medium gegeben ist, um so möglichst das komplette Durchflussprofil des Mediums zu erfassen.

Bekannt sind weitere Ausgestaltungen von Ultraschall-Durchflussmessern, die einen austauschbaren Messeinsatz aufweisen. So wird in der EP 0 890 826 B1 ein wannenförmiger Messeinsatz aus Kunststoff mit in spezielle Taschen eingebrachten Reflexionsscheiben beschrieben. Weiterhin werden in der EP 1 978 337 B1 und in der EP 2 278 281 A1 Ultraschall-Durchflussmesser beschrieben, die einen Messeinsatz mit zwei Reflektorhaltern und einem Messrohr enthalten, wobei der insbesondere aus einem Kunststoff gefertigte Messeinsatz axial in ein gesondertes Gehäuse des jeweiligen Ultraschall-Durchflussmessers eingeschoben wird.

Obwohl bereits viele ultraschalbasierte Durchflussmesser bekannt sind, besteht weiterhin Bedarf an verbesserten Lösungen im Hinblick auf die Handhabung, Bedien-/Betriebssicherheit, Messgenauigkeit und/oder Herstellungskosten derartiger Geräte.

Die Aufgabe der Erfindung besteht darin, eine Messarmatur für einen Durchflussmesser der eingangs bezeichneten Art anzugeben, die gegenüber den bekannten Ausgestaltungen weiter verbessert ist.

Zur Lösung dieser Aufgabe wird eine Messarmatur entsprechend den Merkmalen des Patentanspruchs 1 angegeben. Die erfindungsgemäße Messarmatur umfasst ein als Kunststoffteil ausgeführtes im Wesentlichen rohrförmiges Hauptteil mit einer zu einer Durchflussrichtung des Mediums im Wesentlichen parallelen Mittenlängsachse, mit einer als integraler Bestandteil des rohrförmigen Hauptteils ausgeführten und im Inneren angeordneten eigentlichen Messtrecke und mit zwei an einer Außenseite des Hauptteils vorhandenen Wandlerkontaktflächen für zwei Schallwandler, wobei die eine der beiden Wandlerkontaktflächen in der Durchflussrichtung gesehen vor der anderen der beiden Wandlerkontaktflächen angeordnet ist und die Messstrecke sich zumindest teilweise zwischen zwei auf der Mittenlängsachse liegenden Wandlerprojektionsstellen, die sich jeweils durch eine senkrechte Projektion der betreffenden der beiden Wandlerkontaktflächen auf die Mittenlängsachse ergeben, erstreckt. Weiterhin umfasst die erfindungsgemäße Messarmatur zwei von außen in zwei Halteraufnahmeöffnungen des rohrförmigen Hauptteils eingesetzte, in das Innere des rohrförmigen Hauptteils hineinragende und jeweils als ein Kunststoffteil ausgeführte Reflektorhalter, wobei jede der Halteraufnahmeöffnungen jeweils einer der Wandlerkontaktflächen zugeordnet ist. Jeder der Reflektorhalter hat jeweils ein Halteroberteil mit einem Oberteilaußenumfang und ein Halterunterteil in Form eines über den Oberteilaußenumfang überstehenden und im montierten Zustand an einem die betreffende Halteraufnahmeöffnung umgebenden Öffnungsrand anliegenden Montagekragens. An der Außenseite der Wand des rohrförmigen Hauptteils sind zwei jeweils die Halteraufnahmeöffnungen umgebende Montagesockel vorhanden, wobei ein die jeweilige Halteraufnahmeöffnung im Bereich des jeweiligen Montagesockels umgebender Öffnungsrand eine im Wesentlichen ebene Randfläche hat, an der insbesondere der Montagekragen einer der Reflektorhalter anliegt. Der Montagekragen des jeweiligen Reflektorhalters ist mit einem in Richtung des Halteroberteils vorstehenden Montagesteg und der Öffnungsrand im Bereich des jeweiligen Montagesockels mit einer die jeweilige Halteraufnahmeöffnung umgebenden und zum Montagesteg korrespondierenden Montagenut versehen.

Es wurde erkannt, dass sich eine so ausgestaltete Messarmatur sehr preisgünstig herstellen lässt, wobei zugleich eine hohe Druckbeständigkeit gegeben ist. Die Messarmatur kann sich dabei insbesondere aus Kunststoff-Spritzguss-Teilkomponenten zusammensetzen. Die Messtrecke ist einstückig innen an das rohrförmige Hauptteil angeformt bzw. als integraler Bestandteil des rohrförmigen Hauptteil ausgeführt. Dadurch reduziert sich die Anzahl der Einzelkomponenten, was sich günstig auf die Herstellungskosten auswirkt. Das rohrförmige Hauptteil kann insbesondere auch als Gehäuse eines Durchflussmessers verstanden werden. Es ist im Betriebszustand in eine Rohrleitung eingesetzt, durch die das zu erfassende Medium fließt. Zum Anschluss an die Rohrleitung hat das rohrförmige Hauptteil insbesondere auch einen Eingangsstutzen und einen Ausgangsstutzen, wobei beide Stutzen vorzugsweise jeweils mit einem Gewinde versehen sind.

Die Projektionen der beiden Wandlerkontaktflächen, durch die sich die beiden auf der Mittenlängsachse liegenden Wandlerprojektionsstellen ergeben, erfolgen jeweils senkrecht zur Mittenlängsachse, also insbesondere in bezogen auf die Mittenlängsachse radialer Richtung. Die Wandlerkontaktflächen sind insbesondere als Anlageflächen für jeweils einen (Ultra-) Schallwandler ausgebildet, wobei die Wand des rohrförmigen Hauptteils im Bereich der Wandlerkontaktflächen insbesondere ungeöffnet ist, also z.B. keine Durchgangsöffnungen zum Einsetzen der (Ultra-) Schallwandler aufweist. Die Wand des rohrförmigen Hauptteils ist zumindest im Bereich der Wandlerkontaktflächen vorzugsweise durchschallbar oder schalldurchlässig. Diese Wandbereiche sind bevorzugt dazu ausgelegt, die Schallsignale von und zu den (Ultra-)Schallwandlern, die auf den Wandlerkontaktflächen aufliegen, zu übertragen oder passieren zu lassen.

Die Halteraufnahmeöffnungen, in die die beiden Reflektorhalter eingesetzt sind, sind insbesondere eine Rohrwand des rohrförmigen Hauptteils vollständig durchdringende Öffnungen, also insbesondere Durchgangsöffnungen.

Der Aufbau des Reflektorhalters mit dem überstehenden Montagekragen erleichtert die Montage des Reflektorhalters am rohrförmigen Hauptteil und begünstigt danach einen dauerhaft guten und insbesondere dichten Zusammenhalt zwischen diesen Komponenten.

Bezüglich des Aufbaus des rohrförmigen Hauptteils mit den im Wesentlichen ebene Randflächen aufweisenden Montagesockeln kann die ebene Flächengeometrie der Randflächen insbesondere durch die Montagenuten unterbrochen sein, was hier aber auch noch unter den Begriff einer "im Wesentlichen ebenen Randfläche" fallen soll, gerade im Unterschied zu der ansonsten gegebenen insbesondere zylindrischen Außengeometrie des rohrförmigen Hauptteils. Auch die ebene Randfläche erleichtert die Montage des Reflektorhalters am rohrförmigen Hauptteil und begünstigt einen dauerhaft guten und insbesondere dichten Zusammenhalt zwischen diesen Komponenten.

Durch den Montagesteg am jeweiligen Montagekragen und die dazu korrespondierende Montagenut am jeweiligen Montagesockel wird zum einen eine gute Fixierung des eingesetzten Reflektorhalters im rohrförmigen Hauptteil erreicht. Zum anderen verhindert die Montagenut, dass ein im Zuge der Fixierung der beiden Komponenten ggf. verwendeter Kleber oder ein im Zuge der Fixierung der beiden Komponenten mittels eines Schweißverfahrens ggf. aufgeschmolzenes Material mit dem während des Betriebs im Inneren des rohrförmigen Hauptteils geführten Medium in Kontakt kommt. Der Kleber oder das aufgeschmolzene Material kann sich in der Montagenut sammeln, so dass eine anderenfalls mögliche Kontaminierung des Mediums verhindert wird. Dies ist insbesondere dann von Bedeutung, wenn es sich bei dem Medium um Wasser, insbesondere Trinkwasser, handelt und der Durchflussmesser, bei dem die Messarmatur zum Einsatz kommt, ein Wasserzähler ist.

Vorteilhafte Ausgestaltungen des erfindungsgemäßen Durchflussmessers ergeben sich aus den Merkmalen der von Anspruch 1 abhängigen Ansprüche.

Günstig ist eine Ausgestaltung, bei der die Reflektorhalter fest und insbesondere unlösbar mit dem rohrförmigen Hauptteil verbunden sind. Vorzugsweise sind die Reflektorhalter außerdem auch dicht gegenüber einem Austritt des Mediums durch die Halteraufnahmeöffnungen mit dem rohrförmigen Hauptteil verbunden. Dies begünstigt die hohe Druckbeständigkeit der Messarmatur. Außerdem ist dies günstig im Hinblick auf die Funktionstüchtigkeit sowie auf die Bediensicherheit der Messarmatur.

Gemäß einer weiteren günstigen Ausgestaltung sind die Reflektorhalter und das rohrförmige Hauptteil miteinander verschweißt oder verklebt. Dadurch werden ein besonders guter Sitz der Reflektorhalter in den Halteraufnahmeöffnungen sowie eine insbesondere auch dauerhaft feste und dichte Verbindung erreicht.

Gemäß einer weiteren günstigen Ausgestaltung liegt jede der Halteraufnahmeöffnungen jeweils im Wesentlichen einer der Wandlerkontaktflächen gegenüber. Die einander gegenüberliegende Anordnung bezieht sich insbesondere auf die Mittenlängsachse bzw. auf eine die Mittenlängsachse enthaltende Ebene. Hierbei handelt es sich um einen konstruktiv einfachen Aufbau mit einem insbesondere auch einfachen Schallweg. Grundsätzlich sind aber andere geometrische Anordnungen der Halteraufnahmeöffnung und der zugehörigen Wandlerkontaktfläche denkbar, z.B. eine zueinander schräg versetzte Anordnung.

Gemäß einer weiteren günstigen Ausgestaltung sind das rohrförmige Hauptteil und die Reflektorhalter jeweils als ein aus einem Kunststoff hergestelltes Spritzgussteil ausgeführt. So können diese Komponenten einfach und kostengünstig hergestellt werden. Außerdem lässt sich das rohrförmige Hauptteil (inklusive der innen integrierten Messstrecke) einfach abformen, d.h. aus der Spritzgussform entfernen. Die erst nachträglich eingesetzten Reflektorhalter stellen kein Hindernis beim Abformen dar. Die Geometrie des rohrförmigen Hauptteils, insbesondere dessen Innengeometrie, eignet sich vorzugsweise sehr gut für eine kostengünstige Spritzgussherstellung. Gleiches gilt auch für die Reflektorhalter.

Gemäß einer weiteren günstigen Ausgestaltung weist jeder der Reflektorhalter jeweils ein eingegossenes oder ein insbesondere nachträglich, z.B. nach erfolgter Herstellung des Reflektorhalters, eingesetztes Reflexionselement oder eine insbesondere intrinsische Reflexionsfläche auf. Dadurch wird eine Umlenkung der von den Schallwandlern ausgesendeten Schallsignale erreicht. Dementsprechend kann das Reflexionselement auch als Umlenkungselement und die Reflexionsfläche als Umlenkungsfläche bezeichnet werden. Bei dem Reflexionselement kann es sich beispielsweise um einen Metallreflektor oder um einen Keramikreflektor handeln. Die intrinsische Reflexionsfläche lässt sich insbesondere dadurch realisieren, dass der Reflektorhalter inklusive dieser Reflexionsfläche aus einem metallfaserverstärkten Kunststoff gefertigt, z.B. gespritzt, ist. Gemäß einer weiteren vorteilhaften Ausgestaltung kann jeder der Reflektorhalter jeweils einen insbesondere eingeschlossenen Bereich mit anderen akustischen Eigenschaften als ein Haltermaterial, aus dem der übrige Reflektorhalter besteht, aufweisen, um auf diese Weise das gewünschte Reflexionsverhalten zu erzielen. Bei dem Bereich mit anderen akustischen Eigenschaften kann es sich beispielsweise um eine eingeschlossene Gasblase handeln.

Gemäß einer weiteren günstigen Ausgestaltung ist jeder Reflektorhalter mit einer Positionierungshilfe versehen. Es handelt sich insbesondere um eine mechanische Positionierungshilfe beispielsweise in Form eines geometrischen Elements, vorzugsweise in Form einer an einem Montagekragen des jeweiligen Reflektorhalters angebrachten Positionierungsvorsprungs. Am die Halteraufnahmeöffnung umgebenden Öffnungsrand ist insbesondere eine zum Positionierungsvorsprung korrespondierende Positionierungsvertiefung oder -ausnehmung vorhanden. Durch die Positionierungshilfe kann eine Fehlmontage des Reflektorhalters verhindert werden. Der Reflektorhalter lässt sich dann vorteilhafterweise nur mit korrekter Orientierung in die Halteraufnahmeöffnung einsetzen.

Gemäß einer weiteren günstigen Ausgestaltung ist die Messstrecke zumindest auch durch einen sich innen verengender Teilabschnitt des rohrförmigen Hauptteils gebildet, wobei im Bereich des sich verengenden Teilabschnitts außen am rohrförmigen Hauptteil anstelle einer geschlossenwandigen zylinderförmigen Außengeometrie sich in Bezug auf die Mittenlängsachse in radialer Richtung nach außen erstreckende Verstärkungsrippen angeordnet sind. Dadurch kann die Menge an für die Wand benötigtem Material reduziert werden. Neben der Kosteneinsparung resultiert ein geringeres Gewicht, bei nicht oder nicht wesentlich reduzierter mechanischer Stabilität.

Gemäß einer weiteren günstigen Ausgestaltung sind zum Anschluss an ein Rohrleitungssystem an dem rohrförmigen Hauptteil ein Eingangsstutzen und ein Ausgangsstutzen vorhanden, die jeweils mit einem Außengewinde versehen sind, wobei außen am rohrförmigen Hauptteil nur ein einziger Werkzeugflansch zur Fixierung des rohrförmigen Hauptteils mittels eines Werkzeugs während der Herstellung einer eingangs- und ausgangsseitigen Gewindeverbindung mit dem Rohrleitungssystem vorhanden ist. Auch durch diese Maßnahme lässt sich Material einsparen und es ergibt sich eine Kosten- und Gewichtsreduktion.

Gemäß einer weiteren günstigen Ausgestaltung haben die Halteraufnahmeöffnungen jeweils eine freie Öffnungsfläche, deren Flächeninhalt bezogen auf eine Nenn-Rohrquerschnittsfläche des rohrförmigen Hauptteils im Bereich zwischen 20% und 50% liegt. Die Nenn-Rohrquerschnittsfläche des rohrförmigen Hauptteils bestimmt sich insbesondere anhand eines an einem Eingangsstutzen und/oder an einem Ausgangsstutzen des rohrförmigen Hauptteils gegebenen Rohrinnendurchmessers. Sie ist insbesondere gleich der Nenn-Rohrquerschnittsfläche eines Rohrleitungssystems, zum Einbau in welches die Messarmatur bestimmt ist und in welchem das flüssige oder gasförmige Medium während des Betriebs geführt bzw. transportiert wird. Bei den genannten Größenverhältnissen der Öffnungsflächen der Halteraufnahmeöffnungen lassen sich die Halteraufnahmeöffnungen zum einen druckdicht (d.h. insbesondere auch dicht gegenüber einem Austritt des flüssigen oder gasförmigen Mediums während des Betriebs) durch die eingesetzten Reflektorhalter verschließen. Zum anderen sind die Reflektorhalter und insbesondere deren Reflexionselemente oder Reflexionsflächen groß genug, um zumindest einen großen Anteil eines während des Betriebs auftreffenden Schallsignals zu erfassen und in der gewünschten Weise umzulenken. Für den druckdichten Verschluss ist eine möglichst kleine Öffnungsfläche wünschenswert, während für eine Schallerfassung und -umlenkung eine möglichst große Fläche bevorzugt ist. Die oben genannten Größenangaben stellen insofern einen erkannten guten Kompromiss zwischen diesen beiden gegenläufigen Anforderungen dar.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Messarmatur für einen Durchflussmesser mit einem rohrförmigen Hauptteil und zwei eingesetzten Reflektorhaltern in einer Längsschnittdarstellung mit Ansicht von der Seite,
- Fig. 2: die Messarmatur in Darstellung des Querschnitts II - II gemäß Fig. 1,
- Fig. 3: die Messarmatur gemäß Fig. 1 und 2 in einer perspektivischen Darstellung, und
- Fig. 4: einen der Reflektorhalter vor dem Einbau in die Messarmatur gemäß Fig. 1 bis 3 in einer perspektivischen Darstellung.

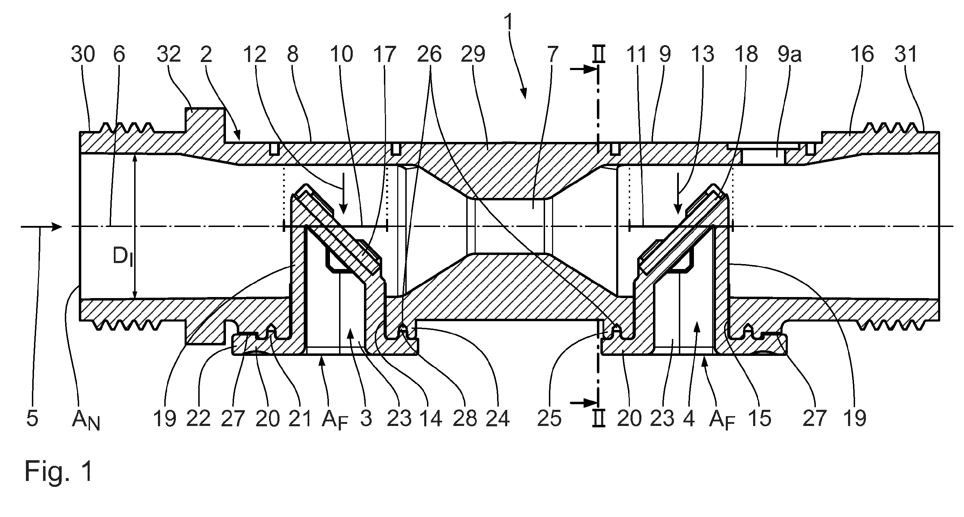

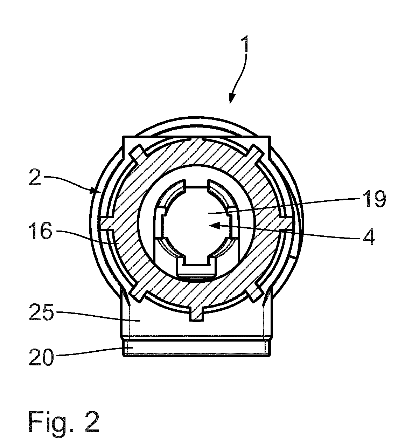

Einander entsprechende Teile sind in den Fig. 1 bis 4 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 bis 3 ist ein Ausführungsbeispiel einer Messarmatur 1 für einen (ultra-)schallbasierten Durchflussmesser gezeigt. Die Messarmatur 1 umfasst ein im Wesentlichen rohrförmiges Hauptteil 2 sowie zwei Reflektorhalter 3 und 4, die in das rohrförmige Hauptteil 2 eingesetzt und mit ihm unlösbar verbunden sind. Ein Durchflussmesser, für den die Messarmatur 1 vorgesehen ist, dient zur Erfassung der Durchflussmenge eines während des Betriebs durch das rohrförmige Hauptteil 2 strömenden flüssigen oder gasförmigen Mediums. Das Medium passiert das rohrförmige Hauptteil 2 in einer Durchflussrichtung 5, die im Wesentlichen parallel zu einer Mittenlängsachse 6 des rohrförmigen Hauptteils 2 orientiert ist. Das rohrförmige Hauptteil 2 umfasst als integralen Bestandteil eine Messtrecke 7, die innerhalb des rohrförmigen Hauptteils 2 als ein sich verengender Teilabschnitt angeordnet ist.

An einer Außenseite seiner Wand 16 hat das rohrförmige Hauptteil 2 zwei Wandlerkontaktflächen 8 und 9, an denen während des bestimmungsgemäßen Einsatzes bei einem schallbasierten Durchflussmesser jeweils ein in Fig. 1 bis 3 nicht mit abgebildeter (Ultra-)Schallwandler anliegt. Die Wandlerkontaktflächen 8 und 9 sind jeweils durch eine Dichtungsnut umgeben. Benachbart zur Wandlerkontaktfläche 9 ist eine Durchgangsöffnung 9a zur Aufnahme eines Temperaturfühlers vorhanden. Die Wandlerkontaktfläche 8 ist in der Durchflussrichtung 5 gesehen vor der Wandlerkontaktfläche 9 angeordnet. Außerdem liegt die Messstrecke 7 zwischen zwei Wandlerprojektionsstellen 10 und 11, welche sich jeweils durch eine bezogen auf die Mittenlängsachse 6 senkrechte Projektion 12 bzw. 13 der jeweiligen Wandlerkontaktfläche 8 bzw. 9 auf die Mittenlängsachse 6 ergeben.

Jeder der Wandlerkontaktflächen 8 und 9 ist jeweils eine im rohrförmigen Hauptteil 2 enthaltene Halteraufnahmeöffnung 14 bzw. 15 zugeordnet. Die Halteraufnahmeöffnungen 14 und 15 sind jeweils als Durchgangsöffnungen ausgebildet, die die Wand 16 des rohrförmigen Hauptteils 2 vollständig durchdringen. In diese beiden Halteraufnahmeöffnungen 14 und 15 sind die Reflektorhalter 3 und 4 eingesetzt. Die Wandlerkontaktflächen 8 und 9 sind also auch jeweils einem der Reflektorhalter 3 und 4 zugeordnet. Bei dem gezeigten Ausführungsbeispiel liegt jeder Wandlerkontaktfläche 8 bzw. 9 bezogen auf die Mittenlängsachse 6 sowohl eine der Halteraufnahmeöffnungen 14 und 15 als auch einer der Reflektorhalter 3 und 4 gegenüber.

Jeder der Reflektorhalter 3 und 4 hat an der im eingebauten Zustand der betreffenden Wandlerkontaktfläche 8 bzw. 9 zugewandten Oberseite ein nachträglich eingesetztes Reflexionselement 17 bzw. 18 in Form einer metallischen oder keramischen Scheibe. Die Reflexionselemente 17 und 18 sind bezogen auf die Mittenlängsachse 6 schräg orientiert, insbesondere um 45° geneigt, um ein Schallsignal in Richtung der Messstrecke 7 oder in Richtung der betreffenden Wandlerkontaktfläche 8 bzw. 9 umzulenken. Bei einem anderen nicht gezeigten Ausführungsbeispiel kann anstelle der gesonderten Reflexionselemente 17 und 18 jeweils eine intrinsische Reflexionsfläche als Bestandteil des betreffenden Reflektorhalters 3 bzw. 4 vorhanden sein, um eine Umlenkung des Schallsignals zu bewerkstelligen.

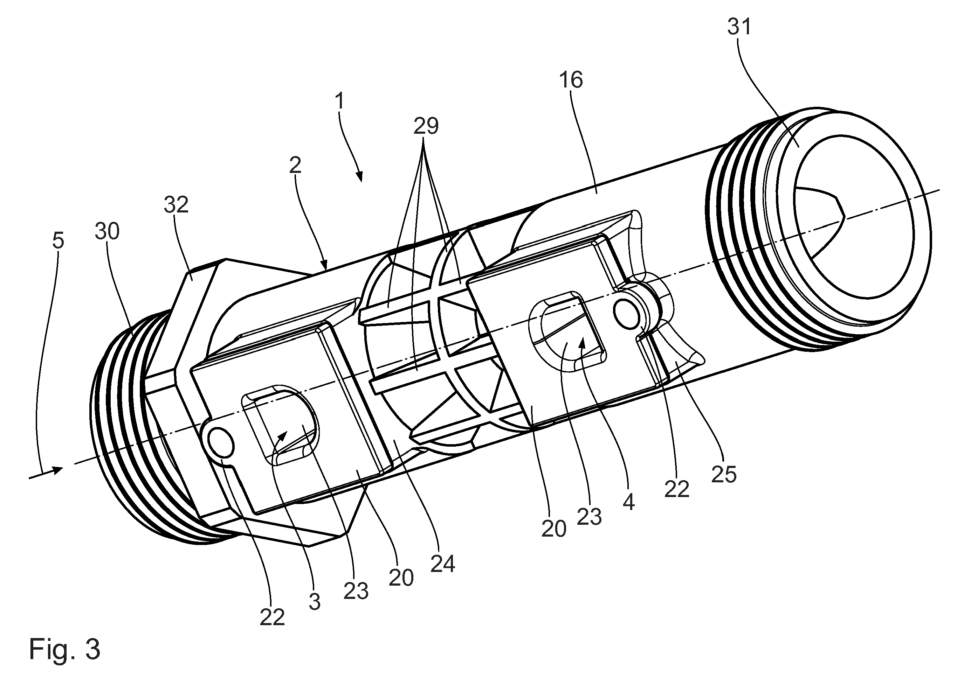

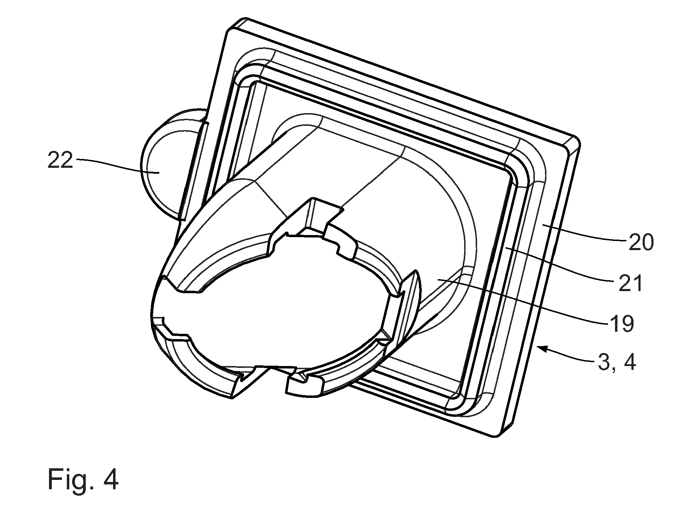

Die beiden Reflektorhalter 3 und 4 sind baugleich. In Fig. 4 ist beispielhaft der Reflektorhalter 3 ohne eingesetztes Reflexionselement 17 perspektivisch dargestellt. Er umfasst als einstückig miteinander verbundene Bestandteile ein Halteroberteil 19 und ein Halterunterteil 20. Das Halterunterteil 20 ist als Montagekragen ausgeführt, der über einen Außenumfang des Halteroberteils 19 seitlich übersteht, und der mit einem in Richtung des Halteroberteils 19 vorstehenden sowie das Halteroberteil 19 vollständig umgebenden Montagesteg 21 versehen ist. Außerdem ist an dem Montagekragen des Halterunterteils 20 eine Positionierungshilfe in Form eines insbesondere in Richtung des Halteroberteils 19 etwas vorstehenden Positionierungsvorsprungs 22 angeordnet. Der Montagekragen des Halterunterteils 20 hat eine rechteckige bzw. quadratische Außenkontur, wohingegen das Halteroberteil 19 zumindest an seiner Oberseite eine im Wesentlichen runde Außenkontur aufweist. Wie aus Fig. 1 und 3 ersichtlich, ist das Halteroberteil 19 hohl ausgestaltet. Ein Hohlraum 23 erstreckt sich von der im eingebauten Zustand außen liegenden Seite (= die in Fig. 4 verdeckte Unterseite) in Richtung der mit dem Reflexionselement 17 versehenen Oberseite des Halteroberteils 19. Der Hohlraum 23 dient der Material- und Gewichtseinsparung.

Als Gegenpart zu den Montagekragen der Reflektorhalter 3 und 4 sind an der Außenseite des rohrförmigen Hauptteils 2 Montagesockel 24 und 25 vorhanden, welche die Halteraufnahmeöffnungen 14 und 15 so umgeben, dass ein Öffnungsrand der betreffenden der Halteraufnahmeöffnungen 14 und 15 eine ebene Randfläche hat. Die Montagesockel 24 und 25 haben eine rechteckige bzw. quadratische Außenkontur, die der der Montagekragen der Halterunterteile 20 der Reflektorhalter 3 und 4 entspricht. Außerdem sind die Montagesockel 24 und 25 mit einer die jeweilige Halteraufnahmeöffnung 14 und 15 umgebenden Montagenut 26 ausgestattet. Die am rohrförmigen Hauptteil 2 an beiden Halteraufnahmeöffnungen 14 und 15 vorhandenen Montagenuten 26 korrespondieren zu den Montagestegen 21 der Reflektorhalter 3 und 4. Im eingesetzten Zustand liegen die Montagekragen der Halterunterteile 20 der Reflektorhalter 3 und 4 an den die Halteraufnahmeöffnungen 14 und 15 mit ebenen Randflächen umgebenden Montagesockeln 24 und 25 an. Dabei greifen die Montagestege 21 in die Montagenuten 26 ein. Ebenso greifen die Positionierungsvorsprünge 22 in an den Montagesockeln 24 und 25 vorhandene korrespondierende Positionierungsvertiefungen 27 ein, wodurch gewährleistet ist, dass der jeweilige Reflektorhalter 3 bzw. 4 mit richtiger Einbaulage eingesetzt ist. Die Reflektorhalter 3 und 4 ragen mit ihrem jeweiligen Halteroberteil 19 in das Innere des rohrförmigen Hauptteils 2 hinein.

Das rohrförmige Hauptteil 2 und die Reflektorhalter 3 und 4 sind bei dem gezeigten Ausführungsbeispiel jeweils Kunststoff-Spritzgussteile. Als Kunststoffmaterial kommt beispielsweise ein Polyphtalamid (PPA), ein Polyphenylensulfid (PPS) oder ein Polyarylsulfon, wie z.B. ein Polyphenylsulfon (PPSU), zum Einsatz. Optional können diesem Kunststoffmaterial auch Metallfasern zur Verstärkung beigemischt sein, insbesondere bei den Reflektorhaltern 3 und 4, nämlich zur vorteilhaften Einstellung oder Erhöhung der Reflektivität. Dann handelt es sich insbesondere um ein metallfaserverstärktes Kunststoffmaterial. Weiterhin kann das Kunststoffmaterial insbesondere in teilkristalliner oder amorpher Form ausgestaltet sein. Die Geometrie des rohrförmigen Hauptteils 2 und der Reflektorhalter 3 und 4 eignet sich sehr gut für eine Spritzguss-Herstellung. Insbesondere lassen sich diese Bauteile nach ihrer Spritzguss-Herstellung ohne Schwierigkeiten und ohne Zusatzmaßnahmen aus den Spritzguss-Formen entfernen bzw. entnehmen.

Nach ihrer Spritzguss-Herstellung werden diese Komponenten zusammengesetzt und fest miteinander verbunden. Insbesondere ist zwischen den eingesetzten Reflexionshaltern 3 und 4 und dem rohrförmigen Hauptteil 2 eine Schweißverbindung oder eine Klebverbindung vorhanden. Diese Verbindung ist unlösbar und dicht gegenüber einem Austritt des während des Betriebs im Inneren der Messarmatur 1 geführten Mediums. Die Halterunterteile 20 der beiden Reflektorhalter 3 und 4 verschließen die Halteraufnahmeöffnungen 14 und 15 jeweils druckdicht. Die Halteraufnahmeöffnungen 14 und 15 haben jeweils eine freie Öffnungsfläche A_{F}, deren Flächeninhalt bezogen auf eine Nenn-Rohrquerschnittsfläche AN des rohrförmigen Hauptteils 2 bei dem gezeigten Ausführungsbeispiel bei etwa 26% liegt. Dabei errechnet sich die Nenn-Rohrquerschnittsfläche AN auf Grundlage eines Innendurchmessers D_{I} des rohrförmigen Hauptteils 2 im eingangsseitigen Bereich.

Die Montagenuten 26 haben eine Nuttiefe, die etwas größer ist als eine Steglänge der Montagestege 21, so dass im eingesetzten Zustand ein kleiner Nuthohlraum 28 verbleibt. Dieser Nuthohlraum 28 dient zur Aufnahme von (überschüssigem) Klebstoff oder von zur Herstellung der Schweißverbindung aufgeschmolzenem Material. Dadurch wird verhindert, dass Klebstoff oder aufgeschmolzenes Material in das Innere des rohrförmigen Hauptteils 2 gelangt und dort während des Betriebs mit dem Medium in Kontakt treten kann. Eine Verschmutzung des Mediums wird so sicher vermieden.

An seiner Außenseite weist das rohrförmige Hauptteil 2 im Bereich des Teilabschnitts, der sich innen verengt und die Messstrecke 7 bildet, keine geschlossenwandige zylinderförmige Außengeometrie auf. Stattdessen sind lediglich singuläre Verstärkungsrippen 29 vorhanden, die sich radial nach außen erstrecken. Die Verstärkungsrippen 29 gewährleisten verglichen mit einer nicht dargestellten alternativen Ausführungsform, bei der die Wand auch in diesem Teilabschnitt aus Vollmaterial besteht, eine ähnliche mechanische Stabilität bei niedrigerem Materialverbrauch und Gewicht.

Das rohrförmige Hauptteil 2 hat zum Anschluss an ein Rohrleitungssystem einen Eingangsstutzen 30 und einen Ausgangsstutzen 31, die jeweils mit einem Außengewinde versehen sind. Um das rohrförmige Hauptteil 2 während der Herstellung der Gewindeverbindung mit dem Rohrleitungssystem in der gewünschten Position halten zu können, ist an der Außenseite des rohrförmigen Hauptteils 2 ein radial vorstehender Werkzeugflansch 32 einstückig angebracht. Mit dem Werkzeugflansch 32 ist nur ein einziger solcher Werkzeugflansch vorhanden. Bei dem gezeigten Ausführungsbeispiel ist er benachbart zu dem Eingangstutzen 30 angeordnet. Alternativ könnte er aber auch an einer anderen Stelle platziert sein. Der Verzicht auf den ansonsten auch am Ausgangstutzen 31 üblichen zweiten Werkzeugflansch führt zu einer Material- und Gewichtseinsparung.

Insgesamt setzt sich die Messarmatur 1 nur aus wenigen Einzelkomponenten zusammen, die sich außerdem sehr gut als kostengünstige Kunststoff-Spritzgussteile herstellen lassen. Günstig ist darüber hinaus auch die Integration der Messstrecke 7 in das rohrförmige Hauptteil 2, wodurch ein ansonsten übliches gesondertes Messstrecken-Bauteil eingespart wird. Die Messarmatur 1 zeichnet sich weiterhin durch ein geringes Gewicht und einen niedrigen Materialverbrauch aus. Insofern handelt es sich bei der Messarmatur 1 um ein sehr preiswertes Bauteil.

## Patentansprüche

1. Messarmatur für einen Durchflussmesser zur schallbasierten Erfassung einer Durchflussmenge eines flüssigen oder gasförmigen Mediums umfassend
a) ein als Kunststoffteil ausgeführtes rohrförmiges Hauptteil (2) mit
- einer zu einer Durchflussrichtung (5) des Mediums parallelen Mittenlängsachse (6),
- einer als integraler Bestandteil des rohrförmigen Hauptteils (2) ausgeführten und im Inneren angeordneten eigentlichen Messtrecke (7) und
- zwei an einer Außenseite einer Wand (16) des Hauptteils (2) vorhandenen Wandlerkontaktflächen (8, 9) für zwei Schallwandler, wobei die eine der beiden Wandlerkontaktflächen (8, 9) in der Durchflussrichtung (5) gesehen vor der anderen der beiden Wandlerkontaktflächen (8, 9) angeordnet ist und die Messstrecke (7) sich zumindest teilweise zwischen zwei auf der Mittenlängsachse (6) liegenden Wandlerprojektionsstellen (10, 11), die sich jeweils durch eine senkrechte Projektion (12, 13) der betreffenden der beiden Wandlerkontaktflächen (8, 9) auf die Mittenlängsachse (6) ergeben, erstreckt,
b) zwei von außen in zwei Halteraufnahmeöffnungen (14, 15) des rohrförmigen Hauptteils (2) eingesetzte, in das Innere des rohrförmigen Hauptteils (2) hineinragende und jeweils als ein Kunststoffteil ausgeführte Reflektorhalter (3, 4), wobei jede der Halteraufnahmeöffnungen (14, 15) jeweils einer der Wandlerkontaktflächen (8, 9) zugeordnet ist, wobei
c) jeder der Reflektorhalter (3, 4) jeweils ein Halteroberteil (19) mit einem Oberteilaußenumfang und ein Halterunterteil (20) in Form eines über den Oberteilaußenumfang überstehenden und im montierten Zustand an einem die betreffende Halteraufnahmeöffnung (14, 15) umgebenden Öffnungsrand anliegenden Montagekragens hat,
d) an der Außenseite der Wand (16) des rohrförmigen Hauptteils (2) zwei jeweils die Halteraufnahmeöffnungen (14, 15) umgebende Montagesockel (24, 25) vorhanden sind, wobei ein die jeweilige Halteraufnahmeöffnung (14, 15) im Bereich des jeweiligen Montagesockels (24, 25) umgebender Öffnungsrand eine ebene Randfläche hat, und
e) der Montagekragen des jeweiligen Reflektorhalters (3, 4) mit einem in Richtung des Halteroberteils (19) vorstehenden Montagesteg (21) und der Öffnungsrand im Bereich des jeweiligen Montagesockels (24, 25) mit einer die jeweilige Halteraufnahmeöffnung (14, 15) umgebenden und zum Montagesteg (21) korrespondierenden Montagenut (26) versehen ist.

2. Messarmatur nach Anspruch 1, **dadurch gekennzeichnet, dass** die Reflektorhalter (3, 4) fest und insbesondere unlösbar mit dem rohrförmigen Hauptteil (2) verbunden sind.

3. Messarmatur nach Anspruch 1 oder 2, **dadurch gekennzeichnet, dass** die Reflektorhalter (3, 4) und das rohrförmige Hauptteil (2) miteinander verschweißt oder verklebt sind.

4. Messarmatur nach einem der vorhergehenden Ansprüche, **dadurch gekennzeichnet, dass** jede der Halteraufnahmeöffnungen (14, 15) jeweils einer der Wandlerkontaktflächen (8, 9) gegenüberliegt.

5. Messarmatur nach einem der vorhergehenden Ansprüche, **dadurch gekennzeichnet, dass** das rohrförmige Hauptteil (2) und die Reflektorhalter (3, 4) jeweils als ein aus einem Kunststoff hergestelltes Spritzgussteil ausgeführt sind.

6. Messarmatur nach einem der vorhergehenden Ansprüche, **dadurch gekennzeichnet, dass** jeder der Reflektorhalter (3, 4) jeweils ein eingegossenes oder ein eingesetztes Reflexionselement (17, 18) oder eine Reflexionsfläche aufweist.

7. Messarmatur nach einem der vorhergehenden Ansprüche, **dadurch gekennzeichnet, dass** jeder Reflektorhalter (3, 4) mit einer Positionierungshilfe versehen ist, insbesondere in Form einer an einem Montagekragen des jeweiligen Reflektorhalters (3, 4) angebrachten Positionierungsvorsprungs (22).

8. Messarmatur nach einem der vorhergehenden Ansprüche, **dadurch gekennzeichnet, dass** die Messstrecke (7) zumindest auch durch einen sich innen verengender Teilabschnitt des rohrförmigen Hauptteils (2) gebildet ist, wobei im Bereich des sich verengenden Teilabschnitts außen am rohrförmigen Hauptteil (2) anstelle einer geschlossenwandigen zylinderförmigen Außengeometrie sich in Bezug auf die Mittenlängsachse (2) in radialer Richtung nach außen erstreckende Verstärkungsrippen (29) angeordnet sind.

9. Messarmatur nach einem der vorhergehenden Ansprüche, **dadurch gekennzeichnet, dass** zum Anschluss an ein Rohrleitungssystem an dem rohrförmigen Hauptteil (2) ein Eingangsstutzen (30) und ein Ausgangsstutzen (31) vorhanden sind, die jeweils mit einem Außengewinde versehen sind, wobei außen am rohrförmigen Hauptteil (2) nur ein einziger Werkzeugflansch (32) zur Fixierung des rohrförmigen Hauptteils mittels eines Werkzeugs während der Herstellung einer eingangs- und ausgangsseitigen Gewindeverbindung mit dem Rohrleitungssystem vorhanden ist.

10. Messarmatur nach einem der vorhergehenden Ansprüche, **dadurch gekennzeichnet, dass** die Halteraufnahmeöffnungen (14, 15) jeweils eine freie Öffnungsfläche (A_{F}) haben, deren Flächeninhalt bezogen auf eine Nenn-Rohrquerschnittsfläche (AN) des rohrförmigen Hauptteils (2) im Bereich zwischen 20% und 50% liegt.
